(19) Europäisches Patentamt
European Patent Office
Office européen des brevets

(11) **EP 4 249 982 A1**

(12) **EUROPEAN PATENT APPLICATION**

(43) Date of publication:
**27.09.2023 Bulletin 2023/39**

(21) Application number: **22216322.2**

(22) Date of filing: **23.12.2022**

(51) International Patent Classification (IPC):
**G02B 21/00** (2006.01)   **G02B 21/26** (2006.01)
**G02B 21/36** (2006.01)

(52) Cooperative Patent Classification (CPC):
**G02B 21/00; G02B 21/26; G02B 21/362**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2022   JP 2022048227**

(71) Applicant: **SCREEN Holdings Co., Ltd.**
**Kyoto 602-8585 (JP)**

(72) Inventors:
• **YABU, Mitsuhiro**
  **Kyoto, 602-8585 (JP)**
• **YAMAUCHI, Tsubasa**
  **Kyoto, 602-8585 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **OBSERVATION APPARATUS**

(57)     There is provided a technique capable of reducing the weight of a counterweight for a lens unit driven by a voice coil motor. An observation apparatus includes a main frame, the lens unit, an image-forming lens, a driving mechanism, and an urging mechanism. The driving mechanism moves the lens unit by means of the driving force of the voice coil motor. The urging mechanism includes a lever portion, the counterweight, and a wire. The lever portion is supported rotatably about a shaft axis extending in an X direction with respect to the frame. The counterweight applies a force to an effort position in the lever portion, the effort position being spaced apart from a fulcrum position supported by the main frame. The wire connects the lens unit to a load position in the lever portion, the load position being closer to the fulcrum position than the effort position.

FIG. 3

EP 4 249 982 A1

**Description**

BACKGROUND OF THE INVENTION

Field of the Invention

The subject matter disclosed herein relates to an observation apparatus.

Description of the Background Art

Observation apparatuses for observation of objects such as cells under magnification by means of lenses have been known in the past. In this type of observation apparatus, an objective lens is moved in an optical axis direction to focus on an object to be observed. Examples of an actuator for moving the objective lens include: a piezo actuator; a linear motion mechanism using a motor and a ball screw; a mechanism using an ultrasonic motor, a gear, and a cam; and a mechanism using a stepping motor, a gear, and a cam. In some cases, a voice coil motor is used as an actuator for moving a small objective lens.

Mechanisms which use voice coil motors to move objective lenses are disclosed, for example, in Japanese Patent Application Laid-Open No. 2014-056207 and Japanese Patent Application Laid-Open No. 2012-118195.

The voice coil motor is an actuator which uses the Lorentz force generated by passing a current through a coil in a magnetic field of a permanent magnet to output a linear motion. The use of the voice coil motor allows the objective lens to move more responsively than the use of other actuators such as a linear motion mechanism using a motor and a ball screw. However, the voice coil motor is small in driving force outputted therefrom. For this reason, it has not been easy to use the voice coil motor when the mass of the objective lens is large.

It is contemplated that a counterweight is used to reduce the apparent mass of the objective lens. However, the larger the objective lens is, the larger the counterweight is. This results in the increase in the overall size of the apparatus and the increase in the weight of the apparatus.

SUMMARY OF THE INVENTION

It is therefore an object of the present invention to provide a technique capable of reducing the weight of a counterweight for a lens unit driven by a voice coil motor.

To solve the aforementioned problem, a first aspect of the present invention is intended for an observation apparatus comprising: a frame; a lens unit including an objective lens changeable in focal position by adjusting a distance from an object to be observed; a driving mechanism attached to the frame and for moving the lens unit by means of a driving force of a voice coil motor; and an urging mechanism for urging the lens unit upwardly, the urging mechanism including a lever portion supported rotatably about an axis extending in a first direction intersecting a vertical direction with respect to the frame, a counterweight for applying a force to an effort position in the lever portion, the effort position being spaced apart from a fulcrum position supported by the frame, and a connecting portion for connecting the lens unit to a load position in the lever portion, the load position being closer to the fulcrum position than the effort position.

The observation apparatus of first to twelfth aspects is capable of urging the lens unit upwardly with a force greater than the weight of the counterweight, based on the principle of leverage. This allows the lens unit having a large mass to be moved precisely using the voice coil motor, even when the counterweight is light in weight.

A second aspect of the present invention is intended for the observation apparatus of the first aspect, wherein the driving mechanism moves the lens unit upwardly and downwardly.

A third aspect of the present invention is intended for the observation apparatus of the first or second aspect, wherein the connecting portion includes a wire.

A fourth aspect of the present invention is intended for the observation apparatus of the third aspect, wherein the urging mechanism further includes a pulley on which the wire is hung.

A fifth aspect of the present invention is intended for the observation apparatus of the fourth aspect, wherein the pulley is positioned above the lever portion.

In the observation apparatus of the fifth aspect, the wire hung on the pulley positioned above the lever portion is connected to the lever portion. This allows a force corresponding to the weight of the lens unit to be upwardly applied to the load position of the lever portion.

A sixth aspect of the present invention is intended for the observation apparatus of the fifth aspect, wherein the load position is set between the fulcrum position and the effort position.

In the observation apparatus of the sixth aspect, a balance is struck between the upward force corresponding to the weight of the lens unit and applied to the load position of the lever portion and the downward force corresponding to the weight of the counterweight and applied to the effort position.

A seventh aspect of the present invention is intended for the observation apparatus of any one of the first to sixth aspects, wherein the urging mechanism is spaced apart from the lens unit in the first direction.

An eighth aspect of the present invention is intended for the observation apparatus of any one of the first to seventh aspects, wherein the counterweight has an arc-shaped side portion far from the fulcrum position.

In the observation apparatus of the eighth aspect, the radius of rotation of the counterweight is reduced when the counterweight rotates with the lever portion. This prevents the side portion of the counterweight from contacting other members.

A ninth aspect of the present invention is intended for the observation apparatus of any one of the first to eighth aspects, wherein the position of the counterweight in the lever portion is adjustable toward or away from the fulcrum position.

A tenth aspect of the present invention is intended for the observation apparatus of the ninth aspect, which further comprises a screw for fixing the counterweight to the lever portion, wherein the counterweight or the lever portion has an insertion hole in which the screw is inserted, the insertion hole extending toward or away from the fulcrum position.

In the observation apparatus of the tenth aspect, the position of the counterweight is adjustable toward or away from the fulcrum position by adjusting the position of the screw for fixing the counterweight.

An eleventh aspect of the present invention is intended for the observation apparatus of any one of the first to tenth aspects, wherein the center of gravity of the counterweight is displaced away from the fulcrum position.

In the observation apparatus of the eleventh aspect, moment is increased by displacing the center of gravity away from the fulcrum position. This reduces the weight of the counterweight.

A twelfth aspect of the present invention is intended for the observation apparatus of the eleventh aspect, wherein the counterweight has a portion with a width increasing as a distance from the fulcrum position increases.

In the observation apparatus of the twelfth aspect, the width increases as the distance from the fulcrum position increases, whereby the center of gravity of the counterweight is displaced away from the fulcrum position.

These and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a side view schematically showing a configuration of an observation apparatus according to a preferred embodiment;
Fig. 2 is a side view of the observation apparatus shown in Fig. 1;
Fig. 3 is a rear view of the observation apparatus shown in Fig. 1;
Fig. 4 is a plan view of the observation apparatus shown in Fig. 1;
Fig. 5 is a view conceptually showing forces applied to a lever portion shown in Fig. 1; and
Fig. 6 is a view conceptually showing forces applied to a lever portion according to a modification.

DESCRIPTION OF THE PREFERRED EMBODIMENTS

A preferred embodiment according to the present invention will now be described with reference to the drawings. Components described in the preferred embodiment are merely illustrative, and there is no intention to limit the scope of the present invention thereto. In the drawings, the dimensions of components and the number of components are shown in exaggeration or in simplified form, as appropriate, for the sake of easier understanding in some cases.

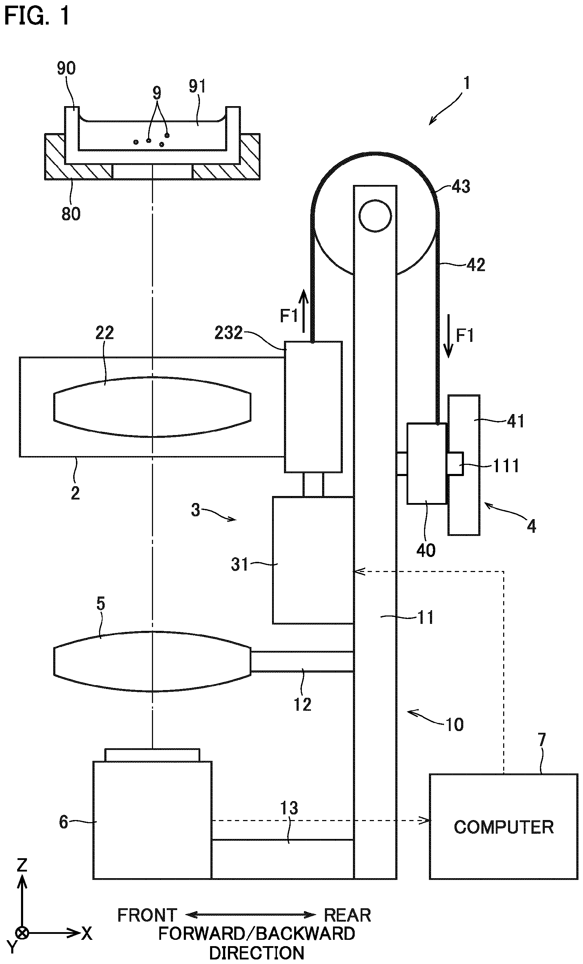

Arrows representing X-, Y-, and Z-axes that intersect each other are shown in Fig. 1 and the subsequent figures. Preferably, the X-, Y-, and Z-axes are orthogonal to each other. In the following description, directions along the X-, Y-, and Z-axes are referred to as an "X direction", a "Y direction", and a "Z direction", respectively. The direction to which the tip of each of the arrows points shall be the + (plus or positive) side, and the side opposite to the + side shall be the - (minus or negative) side.

In the following description, the Z direction shall be a vertical direction, and +Z and -Z directions shall be vertically upward and vertically downward directions, respectively. As shown in Fig. 1, the side on which a voice coil motor 31 is provided with respect to a main frame 11 shall be the -X side, and the side opposite thereto shall be the +X side.

<1. Preferred Embodiment>

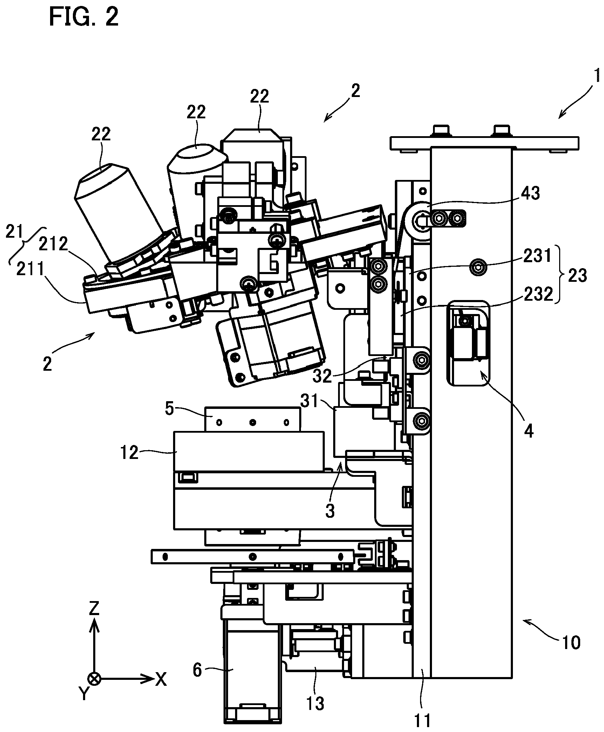

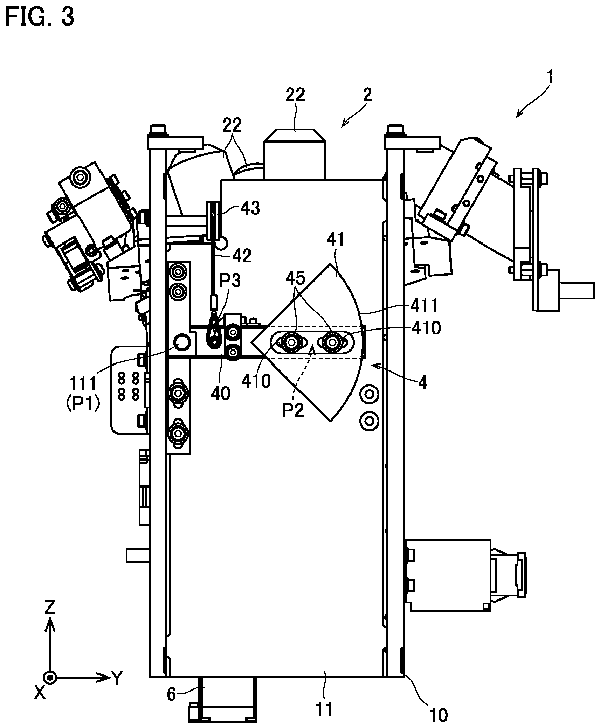

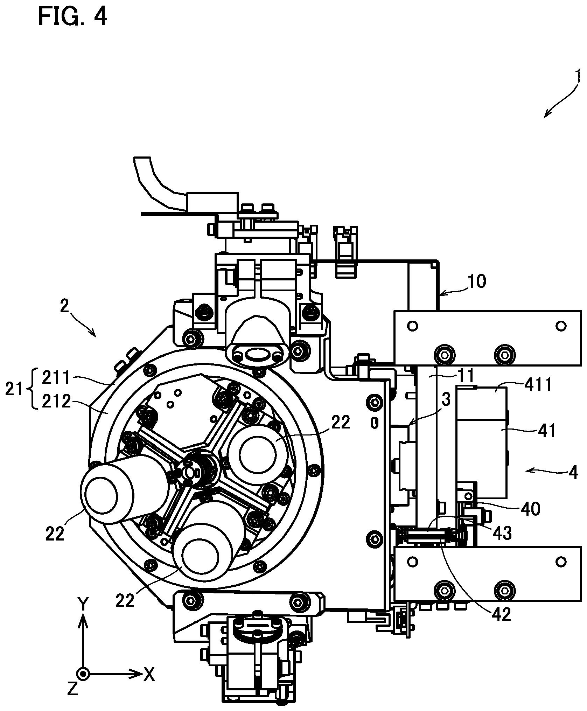

Fig. 1 is a side view schematically showing a configuration of an observation apparatus 1 according to a preferred embodiment. Fig. 2 is a side view of the observation apparatus 1 shown in Fig. 1. Fig. 3 is a rear view of the observation apparatus 1 shown in Fig. 1. Fig. 4 is a plan view of the observation apparatus 1 shown in Fig. 1.

The observation apparatus 1 is an apparatus for observation of cells 9 held in a specimen container 90 under magnification by means of objective lenses 22 to be described later. The specimen container 90 is, for example, a well plate or a petri dish. The specimen container 90 is placed in a horizontal attitude on a support base 80 positioned above the observation apparatus 1. Lighting may be provided above the specimen container 90 placed on the support base 80. The specimen container 90 is made of a transparent resin permeable to light. The cells 9 to be observed are held with a culture solution 91 in the specimen container 90. The cells 9 are transparent or semitransparent biological specimens. The cells 9 are suctioned onto the bottom in the specimen container 90 or suspended in the culture solution 91 in the specimen container 90.

The observation apparatus 1 acquires images of the cells 9 held in the specimen container 90 by photographing the cells 9 from below the specimen container 90. As shown in Figs. 1 to 4, the observation apparatus 1 includes a frame 10, a lens unit 2, a driving mechanism 3, an urging mechanism 4, an image-forming lens 5, an imaging part 6, and a computer 7.

The frame 10 is a member for supporting parts of the observation apparatus 1 except the computer 7. The frame 10 is made of, for example, a metal with high rigidity. The frame 10 is placed on a horizontal surface. As shown in Figs. 1 to 4, the frame 10 includes the main frame 11, a first support portion 12, and a second support portion 13. The main frame 11 is in the shape of a plate extending in an upward/downward direction (Z direction). The first support portion 12 and the second support portion 13 are positioned on the -X side with respect to the main frame 11, and protrude toward the -X side from the main frame 11. The second support portion 13 is spaced downwardly from the first support portion 12. The image-forming lens 5 is attached to the first support portion 12. The imaging part 6 is attached to the second support portion 13.

The lens unit 2 includes a revolver (revolving nosepiece) 21 (not shown in Fig. 1), the objective lenses 22 supported by the revolver 21, and a moving element 232 to be described later. As shown in Figs. 2 to 4, the revolver 21 includes a planar support plate 211 and a turntable 212. The turntable 212 includes a plurality of lens mounting surfaces. The lens mounting surfaces have a positional relationship corresponding to flat side surfaces of a polygonal pyramid (in this example, a quadrangular pyramid). The revolver 21 is disposed in an inclined attitude so that one of the lens mounting surfaces of the turntable 212 is horizontal. The turntable 212 is supported by the support plate 211 rotatably about the central axis of the aforementioned polygonal pyramid. The objective lenses 22 are attached to the respective lens mounting surfaces of the turntable 212.

Each of the objective lenses 22 is changeable in focal position by adjusting the distance from an object to be observed. The objective lenses 22 differ from each other in optical properties such as a focal length. A user of the observation apparatus 1 may rotate the turntable 212 to select and use any one of the objective lenses 22.

The revolver 21 is attached to the main frame 11 via a linear guide 23. The linear guide 23 includes a rail 231 and the moving element 232. As shown in Fig. 2, the rail 231 is formed on the -X side surface of the main frame 11. The rail 231 extends linearly in the upward/downward direction. The moving element 232 is fixed to the support plate 211 of the revolver 21. The moving element 232 is movable in the upward/downward direction along the rail 231. This allows the lens unit 2 to move in the upward/downward direction with respect to the main frame 11.

The driving mechanism 3 moves the lens unit 2 in the upward/downward direction. The upward/downward movement of the lens unit 2 causes the objective lenses 22 to be focused on the cells 9. The driving mechanism 3 includes the voice coil motor 31. The voice coil motor 31 has a casing fixed to the main frame 11. The voice coil motor 31 is an actuator which uses the Lorentz force generated by passing a current through a coil in a magnetic field of a permanent magnet to output a linear motion. The voice coil motor 31 has an advantage in its very high responsivity over other typical actuators. The voice coil motor 31 has an output shaft 32 connected to the moving element 232 of the linear guide 23. Thus, when a driving current is supplied to the coil of the voice coil motor 31, the output shaft 32 and the lens unit 2 move integrally in the upward/downward direction.

<Urging Mechanism>

The urging mechanism 4 is a mechanism for assisting the driving mechanism 3 in moving the lens unit 2. The urging mechanism 4 includes a lever portion 40, a counterweight 41, a wire 42, and a pulley 43.

The lever portion 40 is a member with rigidity. As shown in Fig. 3, the lever portion 40 has the shape of a rectangular parallelepiped extending in the Y direction. The lever portion 40 is coupled to a support shaft 111 via a bearing (not shown). The support shaft 111 extends in the X direction, and protrudes in the +X direction from the main frame 11. The support shaft 111 supports the lever portion 40 rotatably about a predetermined axis extending in the X direction (a first direction). That is, the lever portion 40 is supported rotatably about the axis extending in the X direction with respect to the main frame 11. The bearing may be provided in the lever portion 40. In this case, the support shaft 111 is non-rotatable with respect to the main frame 11, and the lever portion 40 rotates with respect to the support shaft 111.

Part of the lever portion 40 which is coupled to the support shaft 111 (part in a fixed position with respect to the main frame 11) corresponds to a fulcrum position P1. The fulcrum position P1 is set in an end part of the lever portion 40 on the -Y side.

It is not essential that the lever portion 40 extends in a straight line in one direction. For example, the lever portion 40 may have a bent or curved part. Also, the lever portion 40 may be disk-shaped.

The counterweight 41 is a weight for reducing the apparent weight of the lens unit 2. As show in Figs. 1, 3, and 4, the counterweight 41 is positioned on the +X side with respect to the main frame 11. The counterweight 41 is attached to the lever portion 40 with two screws 45 serving as fixtures. The position where the counterweight 41 is attached to the lever portion 40 corresponds to an effort position P2. The effort position P2 is spaced apart from the fulcrum position P1. In this manner, the counterweight 41 is disposed in the effort position P2, and applies a downward force corresponding to the weight of the counterweight 41 to the effort position P2.

As shown in Fig. 3, the counterweight 41 has insertion holes 410 through which the screws 45 are inserted. In this example, the counterweight 41 has the two insertion holes 410 for the two screws 45. The insertion holes 410 are slots each extending toward or away from the fulcrum position P1. The insertion holes 410 in the form of slots allow the position of the counterweight 41 (i.e., the effort position P2) to be adjusted toward or away from the fulcrum position P1. Holes (not shown) provided in the lever portion 40 into which the screws 45 are inserted may be slots.

It is not essential that the screws 45 are used to fix the counterweight 41 to the lever portion 40. For example, the counterweight 41 may be attached to the lever portion 40 via a wire hooked on the lever portion 40. For hooking the wire, a hook may be provided on the lever portion 40. Also, a plurality of hooks may be provided at different distances from the fulcrum position P1. The provision of the plurality of hooks allows the adjustment of the position where the counterweight 41 is attached (i.e., the effort position P2).

The lever portion 40 may have a guide portion such as a guide rail so that the counterweight 41 slidably moves on the lever portion 40.

As shown in Fig. 3, the counterweight 41 has, for example, the shape of a sector. The counterweight 41 has an arc-shaped side portion 411 far from the fulcrum position P1 (in the example shown in Fig. 3, on the +Y side). The counterweight 41, together with the lever portion 40, is rotatable about the support shaft 111 (the fulcrum position P1). The provision of the arc-shaped side portion 411 of the counterweight 41 reduces the radius of rotation of the counterweight 41 when the counterweight 41 rotates about the fulcrum position P1. This prevents the side portion 411 of the counterweight 41 from contacting other members (e.g., the frame 10). The shape of the counterweight 41 is not limited to the shape of a sector, but is selected arbitrarily.

The wire 42 is a linear member which connects the lens unit 2 and the lever portion 40 to each other. The wire 42 is an example of a connecting portion. The wire 42 has a first end connected to the moving element 232 and a second end connected to a load position P3 of the lever portion 40. The load position P3 is closer to the fulcrum position P1 than the effort position P2 is. In this example, the load position P3 is set between the fulcrum position P1 and the effort position P2. The pulley 43 is spaced upwardly from the moving element 232 and the lever portion 40. The pulley 43 is rotatable about an axis extending in the Y direction.

The wire 42 is connected to the lever portion 40 from above by hanging the wire 42 on the pulley 43. This applies a force corresponding to the weight of the lens unit 2 via the wire 42 to the load position P3 of the lever portion 40 in an upward direction. Also, an upward force is applied to the load position P3, and a downward force corresponding to the weight of the counterweight 41 is applied to the effort position P2, whereby the lever portion 40 is balanced.

The image-forming lens 5 is a lens for causing light passed through the objective lenses 22 to form an image on the imaging part 6. The image-forming lens 5 is positioned below the objective lenses 22. The image-forming lens 5 is fixed to the first support portion 12 of the frame 10. Thus, the position of the image-forming lens 5 is fixed relative to the frame 10.

The imaging part 6 is a camera which captures images of the cells 9 formed by the image-forming lens 5. The imaging part 6 is positioned below the image-forming lens 5. The imaging part 6 is fixed to the second support portion 13 of the frame 10. Thus, the position of the imaging part 6 is fixed relative to the frame 10. The objective lenses 22, the image-forming lens 5, and the imaging part 6 are aligned in front of the main frame 11 along an optical axis extending in the upward/downward direction. The imaging part 6 has imaging elements, such as CMOS, CCD, and other imaging elements. The imaging part 6 acquires an image of the cells 9 as multi-level gradation digital data including a plurality of pixels. Then, the imaging part 6 outputs the acquired image data to the computer 7.

The computer 7 is an information processing device including a processor such as a CPU, a memory such as a RAM, and a storage part such as a hard disk drive. As indicated by dashed arrows in Fig. 1, the computer 7 is electrically connected to the driving mechanism 3 and the imaging part 6. A computer program for executing an observation process is installed in the computer 7. The computer 7 operates in accordance with the computer program. This controls the operations of the driving mechanism 3 and the imaging part 6. Specifically, the computer 7 operates the driving mechanism 3 to adjust the height of the lens unit 2, thereby focusing the objective lenses 22 on the cells 9. Also, the computer 7 operates the imaging part 6 to photograph the cells 9. In addition, the computer 7 performs image processing on the image data outputted from the imaging part 6. This convers the image data into image data suitable for the observation of the cells 9.

As described above, the observation apparatus 1 captures the images of the cells 9 suspended in the culture solution 91. At this time, there are cases in which the height of the objective lenses 22 should be changed precisely. For example, there are cases in which the observation apparatus 1 photographs a plurality of times (focus bracketing) while changing the vertical position of the focus of the objective lenses 22. In this case, what is called an all-in-focus image is generated in which all of the cells 9 different in height are in focus by combining a plurality of images outputted from the imaging part 6. Even in the case of such focus bracketing, the observation apparatus 1 of the present preferred embodiment is capable of changing the height of the objective lenses 22 quickly and precisely by means of the voice coil motor 31.

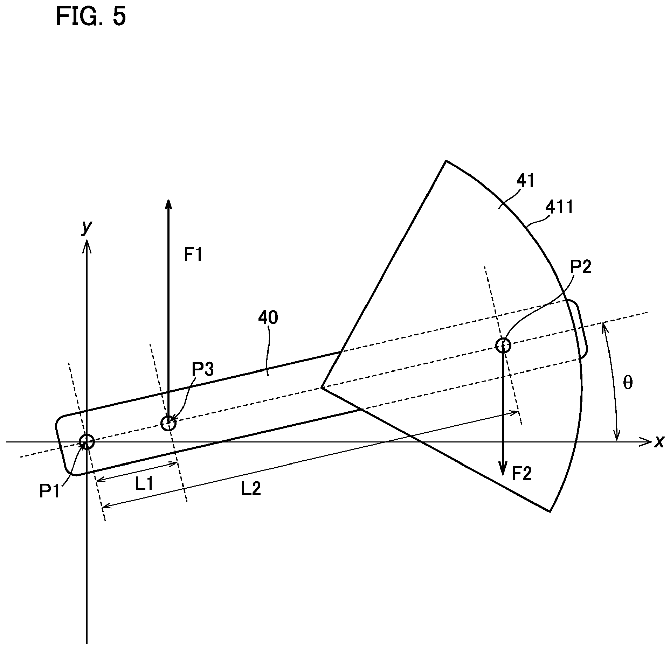

Fig. 5 is a view conceptually showing forces applied to the lever portion 40 shown in Fig. 1. In Fig. 5, "F1" denotes the gravity (N) of the lens unit 2 transmitted via the wire 42 and the pulley 43; "F2" denotes the gravity (N) of the counterweight 41; "L1" denotes a distance (m) from the fulcrum position P1 (origin) to the load position P3 where the force F1 acts; "L2" denotes a distance (m) from the fulcrum position P1 (origin) to the effort position P2 where the force F2 acts; and "θ" denotes the angle of rotation (rad) of the lever portion 40 about the fulcrum position P1.

When the lever portion 40 is balanced as shown in Fig. 5, the following equation holds.

$$F1 \cdot L1 \cdot \cos\theta = F2 \cdot L2 \cdot \cos\theta \qquad (1)$$

From Equation (1) described above, the force F2 is expressed by

$$F2 = F1 \cdot (L1/L2) \qquad (2)$$

The distance L2 is set herein so as to be greater than the distance L1 (L1 < L2). Thus, when the lever portion 40 is balanced, the force F2 is smaller than the force F1 according to Equation (2). In other words, the lens unit 2 is urged upwardly with a force greater than the force F2 corresponding to the weight of the counterweight 41. As is apparent from Equation (2), the lens unit 2 is urged upwardly with a constant force regardless of the rotation angle θ of the lever portion 40.

The counterweight 41 increases in width (dimension as measured in a direction intersecting (preferably orthogonal to) the direction from the fulcrum position P1 to the effort position P2) as a distance from the fulcrum position P1 increases. When the counterweight 41 has the shape of a sector as in this example, the width of the counterweight 41 increases at a constant rate as the distance from the fulcrum position P1 increases. Increasing the width of the counterweight 41 with the increasing distance from the fulcrum position P1 allows the center of gravity of the counterweight 41 to be displaced away from the fulcrum position P1. This increases the moment due to the counterweight 41 to thereby reduce the weight of the counterweight 41. It is not essential to increase the width of the counterweight 41 at a constant rate. For example, the width of the counterweight 41 may be increased stepwise.

As mentioned above, the insertion holes 410 in the form of slots into which the screws 45 are inserted allow the adjustment of the position of the counterweight 41. In other words, the distance L2 from the fulcrum position P1 to the effort position P2 is adjustable in Equation (1) described above. Equation (1) is transformed into:

$$F1 \cdot L1 \cdot \cos\theta = F2(L2 + \alpha) \cdot \cos\theta$$
$$= F2 \cdot L2 \cdot \cos\theta + F2 \cdot \alpha \cdot \cos\theta \qquad (3)$$

where α is an adjustable allowance of the insertion holes 410.

As shown in Equation (3), the provision of the adjustable allowance α allows the moment in the effort position P2 to be adjusted by the amount of F2·α·cosθ. This allows fine adjustment of the force which pulls up the lens unit 2 by means of the counterweight 41.

<Effects>

As described above, the observation apparatus 1 is capable of urging the lens unit 2 upwardly with the force F1 greater than the weight of the counterweight 41, based on the principle of leverage. This reduces the weight of the counterweight 41. The reduction in the weight of the counterweight 41 reduces the weight and size of the urging mechanism 4. This accordingly reduces the weight and size of the observation apparatus 1.

<2. Modifications>

While the preferred embodiment according to the present invention has been described hereinabove, the present invention is not limited to the aforementioned preferred embodiment, but various modifications may be made.

The observation apparatus 1 of the aforementioned preferred embodiment is for the observation of the cells 9, which are objects to be observed, from below. However, the observation apparatus 1 may be for the observation of the cells 9, which are objects to be observed, from above. In other words, the observation apparatus 1 may be disposed above the specimen container 90 which holds the cells 9. In this case, the image-forming lens 5 may be disposed above the lens unit 2, and the imaging part 6 may be disposed above the image-forming lens 5.

In the observation apparatus 1 of the aforementioned preferred embodiment, the voice coil motor 31 is disposed below the lens unit 2. Specifically, the voice coil motor 31 of the aforementioned preferred embodiment pushes the lens unit 2 upwardly when moving the lens unit 2 upwardly, and pulls the lens unit 2 downwardly when moving the lens unit 2 downwardly. However, the voice coil motor 31 may be disposed above the lens unit 2. Specifically, the voice coil motor 31 may pull the lens unit 2 upwardly when moving the lens unit 2 upwardly, and push the lens unit 2 downwardly when moving the lens unit 2 downwardly.

The observation apparatus 1 of the aforementioned preferred embodiment includes the imaging part 6 for photographing the cells 9 which are objects to be observed. However, the observation apparatus 1 need not include the imaging part 6. The observation apparatus 1 may be configured such that a user visually observes the images of the cells 9 formed by the image-forming lens 5.

The observation apparatus 1 may be for the observation of a biological specimen other than the cells 9. Also, the observation apparatus 1 may be for the observation of an object other than the biological specimen.

The observation apparatus 1 of the aforementioned preferred embodiment includes the lever portion 40 and the counterweight 41 as separate parts. However, the counterweight 41 may be formed integrally with the lever portion 40. In the lever portion 40, for example, the width of an effort portion corresponding to the effort position P2 may be greater than the width of a portion in the fulcrum position P1, whereby the effort portion functions as the counterweight 41.

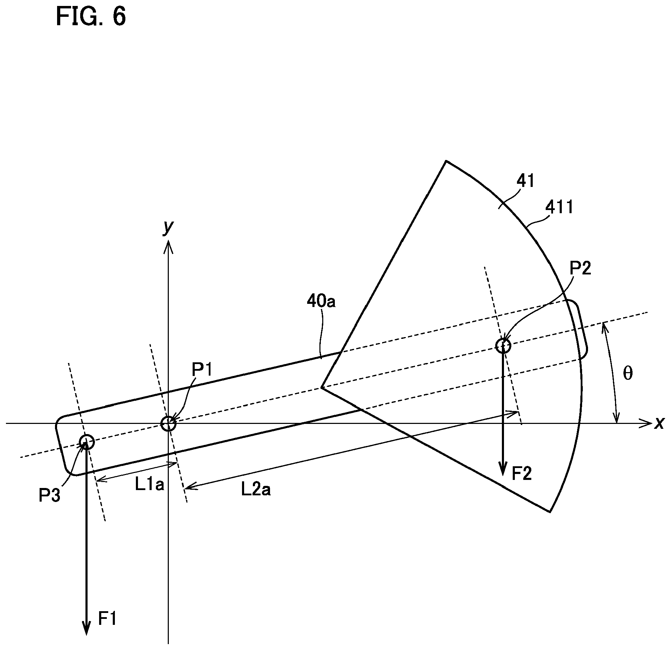

In the observation apparatus 1 of the aforementioned preferred embodiment, the fulcrum position P1 is set in one end part of the lever portion 40, and the load position P3 is set on the same side as the effort position P2 with respect to the fulcrum position P1. However, the positional relationship between the fulcrum position P1, the effort position P2, and the load position P3 is not limited to this. This modification will be described with reference to Fig. 6.

Fig. 6 is a view conceptually showing forces applied to a lever portion 40a according to the modification. In Fig. 6, "L1a" denotes a distance (m) from the fulcrum position P1 (origin) to the load position P3 where the force F1 acts, and "L2a" denotes a distance (m) from the fulcrum position P1 (origin) to the effort position P2 where the force F2 acts. In the example of Fig. 6, the load position P3 is set on the opposite side of the fulcrum position P1 from the effort position P2. In other words, the fulcrum position P1 is set between the effort position P2 and the load position P3.

In the modification shown in Fig. 6, the distance L2a is set so as to be greater than the distance L1a. The lens unit 2 and the counterweight 41 may be connected to the lever portion 40a so that the force F1 applied to the load position P3 and the force F2 applied to the effort position P2 are in the same direction (in this modification, downward). For example, when the force F1 is downward, the lever portion 40a may be disposed above the moving element 232 of the lens unit 2, so that the moving element 232 is suspended by the lever portion 40a.

Even in the modification shown in Fig. 6, the lens unit 2 is urged upwardly with a force greater than the force F2 corresponding to the weight of the counterweight 41 by making the distance L2a greater than the distance L1a. This achieves the reduction in the weight of the counterweight 41.

While the invention has been shown and described in detail, the foregoing description is in all aspects illustrative and not restrictive. It is therefore understood that numerous modifications and variations not illustrated can be devised without departing from the scope of the invention. The components described in the aforementioned preferred embodiment and in the various modifications may be combined together or dispensed with, as appropriate, unless the components are inconsistent with each other.

While the invention has been shown and described in detail, the foregoing description is in all aspects illustrative and not restrictive. It is therefore understood that numerous modifications and variations can be devised without departing from the scope of the invention.

**Claims**

1.   An observation apparatus (1) comprising:

    a frame (11);
    a lens unit (2) including an objective lens (22) changeable in focal position by adjusting a distance from an object (9) to be observed;
a driving mechanism (3) attached to said frame (11) and for moving said lens unit (2) by means of a driving force of a voice coil motor (31); and
an urging mechanism (4) for urging said lens unit (2) upwardly,
said urging mechanism (4) including
a lever portion (40) supported rotatably about an axis extending in a first direction intersecting a vertical direction with respect to said frame (11),
a counterweight (41) for applying a force to an effort position (P2) in said lever portion (40), said effort position (P2) being spaced apart from a fulcrum position (P1) supported by said frame (11), and
a connecting portion (42) for connecting said lens unit (2) to a load position (P3) in said lever portion (40), said load position (P3) being closer to said fulcrum position (P1) than said effort position (P2).

2. The observation apparatus (1) according to claim 1,
wherein said driving mechanism (3) moves said lens unit (2) upwardly and downwardly.

3. The observation apparatus (1) according to claim 1 or 2,
wherein said connecting portion (42) includes a wire (42).

4. The observation apparatus (1) according to claim 3,
wherein said urging mechanism (4) further includes a pulley (43) on which said wire (42) is hung.

5. The observation apparatus (1) according to claim 4,
wherein said pulley (43) is positioned above said lever portion (40).

6. The observation apparatus (1) according to claim 5,
wherein said load position (P3) is set between said fulcrum position (P1) and said effort position (P2).

7. The observation apparatus (1) according to any one of claims 1 to 6,
wherein said urging mechanism (4) is spaced apart from said lens unit (2) in said first direction.

8. The observation apparatus (1) according to any one of claims 1 to 7,
wherein said counterweight (41) has an arc-shaped side portion far from said fulcrum position (P1).

9. The observation apparatus (1) according to any one of claims 1 to 8,
wherein the position of said counterweight (41) in said lever portion (40) is adjustable toward or away from said fulcrum position (P1).

10. The observation apparatus (1) according to claim 9, further comprising

a screw (45) for fixing said counterweight (41) to said lever portion (40),
wherein said counterweight (41) or said lever portion (40) has an insertion hole (410) in which said screw (45) is inserted, said insertion hole extending toward or away from said fulcrum position (P1).

11. The observation apparatus (1) according to any one of claims 1 to 10,
wherein the center of gravity of said counterweight (41) is displaced away from said fulcrum position (P1).

12. The observation apparatus (1) according to claim 11,
wherein said counterweight (41) has a portion with a width increasing as a distance from said fulcrum position (P1) increases.

## FIG. 1

FRONT ⟷ REAR
FORWARD/BACKWARD
DIRECTION

COMPUTER

**FIG. 2**

FIG. 3

FIG. 4

# FIG. 5

FIG. 6

Europäisches
Patentamt

European
Patent Office

Office européen
des brevets

# EUROPEAN SEARCH REPORT

Application Number

EP 22 21 6322

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP H11 153293 A (ZEISS CARL FA) 8 June 1999 (1999-06-08) * paragraph [0032]; figure 1 * ----- | 1-8,12 | INV. G02B21/00 G02B21/26 G02B21/36 |
| Y | US 2008/020128 A1 (VAN RYPER WILLIAM JOHN [US] ET AL) 24 January 2008 (2008-01-24) * paragraph [0013] * ----- | 1-12 | |
| Y | US 2014/291457 A1 (ROTHEISLER RANDY [CA] ET AL) 2 October 2014 (2014-10-02) * paragraph [0041] * ----- | 1 | |
| Y | EP 1 591 817 A1 (MITAKA KOKI KK [JP]) 2 November 2005 (2005-11-02) * figures 8,7 * ----- | 1,9-11 | |

TECHNICAL FIELDS SEARCHED (IPC)

G02B
A61B
F16M

The present search report has been drawn up for all claims

| Place of search | Date of completion of the search | Examiner |
|---|---|---|
| Munich | 31 July 2023 | Jones, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6322

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2023

| Patent document cited in search report | | Publication date | Patent family member(s) | | Publication date |
|---|---|---|---|---|---|
| JP H11153293 | A | 08-06-1999 | CH | 692926 A5 | 13-12-2002 |
| | | | JP | 4122095 B2 | 23-07-2008 |
| | | | JP | H11153293 A | 08-06-1999 |
| | | | JP | 2008215624 A | 18-09-2008 |
| US 2008020128 | A1 | 24-01-2008 | NONE | | |
| US 2014291457 | A1 | 02-10-2014 | NONE | | |
| EP 1591817 | A1 | 02-11-2005 | DE | 602005000651 T2 | 21-06-2007 |
| | | | EP | 1591817 A1 | 02-11-2005 |
| | | | JP | 4504081 B2 | 14-07-2010 |
| | | | JP | 2005312529 A | 10-11-2005 |
| | | | US | 2005247831 A1 | 10-11-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014056207 A

- JP 2012118195 A